# EUROPEAN PATENT SPECIFICATION

(11) **EP 3 024 752 B1**
(45) Date of publication and mention of the grant of the patent: **03.01.2018**
(21) Application number: 14828700.6
(22) Date of filing: 25.07.2014
(51) Int. Cl.: B65D 65/40

(54) **MICROWAVE INTERACTIVE PACKAGING MATERIAL AND METHOD FOR ITS PRODUCTION**
MIKROWELLENINTERAKTIVES VERPACKUNGSMATERIAL SOWIE VERFAHREN ZU SEINER HERSTELLUNG
MATÉRIAU D'EMBALLAGE INTERACTIF VIS-À-VIS DES MICRO-ONDES PROCÉDÉ POUR SA FABRICATION

(30) Priority: 26.07.2013 US 201361858775 P
(43) Date of publication of application: 01.06.2016
(73) Proprietor: Graphic Packaging International, Inc., Atlanta, Georgia 30328 (US)
(72) Inventor: SLOAT, Jeffrey T., Broomfield, CO 80020 (US); GILPATRICK, William, Broomfield, CO 80020 (US)
(74) Representative: Grättinger Möhring von Poschinger Patentanwälte Partnerschaft
(86) International application number: PCT/US2014/048148
(87) International publication number: WO 2015/013589

(56) References cited:
- EP-A1- 2 453 177
- JP-A- 2000 006 295
- JP-A- 2003 054 650
- US-A1- 2003 111 463
- US-A1- 2010 264 135

## Description

### BACKGROUND

Microwave ovens provide a convenient means for heating a variety of food items. It is common for the food being heated to be contained by a package comprising microwave energy interactive material ("MEIM") mounted to a substrate that is transparent to microwave energy. The MEIM may be discontinuous to achieve the desired heating effect of the food item. For example, the MEIM may be discontinuous by virtue of the MEIM defining a pattern. Examples of discontinuous MEIM and associated manufacturing methods are disclosed in prior U.S. Patents.

As a more specific example regarding packaging material in which the MEIM is aluminum that is mounted to a polymer film, it is known to patternize the aluminum in order to achieve a desired heating effect in a microwave oven. For example, it is known to use a rotogravure printing press to apply a pattern of solvent-based resist coating to a continuous layer of aluminum ("precursor aluminum") that was previously mounted to and is being carried by the polymer film. The solvent-based resist coating is applied in the same pattern that is intended to be defined by the resultant patternized aluminum.

After printing, the solvent-based resist coating is dried by evaporating its solvent. The web is then drawn through a caustic bath of 50% sodium hydroxide. The resist coating is resistant to the caustic bath so that the caustic bath does not react with the protected portion of the aluminum, wherein the protected portion of the aluminum is superposed with the resist coating. In contrast, the caustic bath reacts with the unprotected portion of the aluminum, wherein the unprotected portion of the aluminum is not superposed with the resist coating. The caustic bath deactivates the unprotected portion of the aluminum by converting it to aluminum oxide. The aluminum oxide is relatively transparent to light as compared to pure aluminum. In further contrast to aluminum, aluminum oxide is an electrical insulator that is transparent to microwave energy.

The web is rinsed with water immediately after the web is drawn out of the caustic bath. The web is then wet-bond laminated to paperboard to create packaging material. The aluminum, aluminum oxide and resist coating are positioned between the paperboard and the polymer film in the packaging material

The above-described step of evaporating the solvent of the solvent-based resist coating may be a limiting factor in the manufacturing of the packaging material. There is a desire for improvements to manufacturing line speeds, efficiency, quality and/or over-all costs.

### BRIEF SUMMARY

An aspect of this disclosure is the provision of a packaging material according to appended claim 1. Another aspect is the provision of a method for at least forming a microwave energy transparent area in a layer of microwave energy interactive material ("MEIM"), as set out in claim 13. The method includes partially coating the layer of MEIM with thermoset polymeric material. For example, the thermoset polymeric material may be printed onto a first portion of the layer of MEIM. Then, the thermoset polymeric material on the first portion of the layer of MEIM is cured, for example, by exposure to ultraviolet ("UV") light. That is, the thermoset polymeric material may advantageously be a UV-cured material. The cured thermoset polymeric material is for protecting the first portion of the layer of MEIM. In contrast, a second portion of the layer of MEIM is neither covered by nor protected by the cured thermoset polymeric material. The method further includes applying an agent to the coated layer of the MEIM, so that the agent transforms the second portion of the layer of MEIM into a microwave energy transparent area. In contrast, the cured thermoset polymeric material is for protecting the first portion of the layer of MEIM from the agent, so that the first portion of the layer of MEIM remains microwave energy interactive. For example, the agent may be a deactivating agent, so that the deactivating agent deactivates the second portion of the layer of MEIM.

The first portion of the layer of MEIM, which remains microwave energy interactive, may be referred to as resultant MEIM. The microwave energy transparent area, or more specifically the second portion of the layer of MEIM, which was deactivated, may be referred to as deactivated MEIM. Each of the resultant and deactivated MEIMs may be arranged in a pattern.

The resultant and deactivated MEIMs may both be parts of a packaging material that further includes a substrate. The resultant and deactivated MEIMs may be connected to the substrate, such as by a layer of adhesive material. The resultant and deactivated MEIMs may be adjacent to one another on the substrate. The packaging material may further include the thermoset polymeric material in a superposed configuration with the resultant MEIM. The thermoset polymeric material of the packaging material is typically transparent to microwave energy. In an embodiment of this disclosure, the deactivated MEIM is not covered by the thermoset polymeric material.

The substrate of the packaging material may be a first substrate, and the packaging material may further include a second substrate, so that the thermoset polymeric material and the resultant and deactivated MEIMs are positioned between the first and second substrates. The first substrate may be a polymeric film, and the second substrate may be paper, such as paperboard. The packaging material may be configured in any suitable conventional manner.

In one aspect of this disclosure, the deactivated MEIM may be referred to as microwave energy transparent material.

The foregoing presents a simplified summary of some aspects of this disclosure in order to provide a basic understanding. The foregoing is not an extensive summary and is not intended to identify key or critical elements of the invention or to delineate the scope of the invention. The purpose of the foregoing summary is to present some concepts of this disclosure in a simplified form as a prelude to the more detailed description that is presented later. For example, other aspects will become apparent from the following.

### BRIEF DESCRIPTION OF THE DRAWINGS

In the following, reference is made to the accompanying drawings, which are schematic and not drawn to scale. The drawings are exemplary only, and should not be construed as limiting the inventions.
Fig. 1 illustrates a system and method for forming packaging material, in accordance with a first embodiment of this disclosure.
Fig. 2 illustrates a section of the packaging material of Fig. 1, in accordance with an embodiment of this disclosure.
Fig. 3 is a cross-sectional view of a portion of the packaging material of Fig. 2 taken along line 3-3 of Fig. 2, in accordance with an embodiment of this disclosure.

### DETAILED DESCRIPTION

Exemplary embodiments are described below and illustrated in the accompanying drawing, in which like numerals refer to like parts. The embodiments described provide examples and should not be interpreted as limiting the scope of the invention.

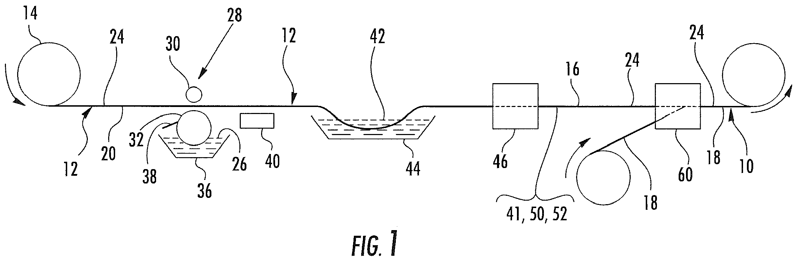

A system for forming a laminated packaging material 10 is illustrated in Fig. 1 and described in the following, in accordance with a first embodiment. Generally described, a conventional precursor web 12 is supplied, such as by drawing the precursor web from a roll 14. The precursor web 12 is transformed into a resultant web 16 in the manner discussed below. The packaging material 10 may be the resultant web 16 in isolation, or the packaging material may comprise the resultant web in combination with an optional substrate 18 and/or other suitable features, as will be discussed in greater detail below. That is, and in accordance with one embodiment of this disclosure, the resultant web 16 is a packaging material. In the first embodiment, each of the resultant web 16 and packaging material 10 is a laminate.

The precursor web 12 comprises, consists of or consists essentially of microwave energy interactive material 20 ("MEIM") mounted to a primary substrate 24 that supports the MEIM and is typically transparent to microwave energy. The primary substrate 24 may be a polymeric film 24 that may comprise, consist of or consist essentially of polyethylene terephthalate, or any other suitable polymeric material may be used, as discussed in greater detail below.

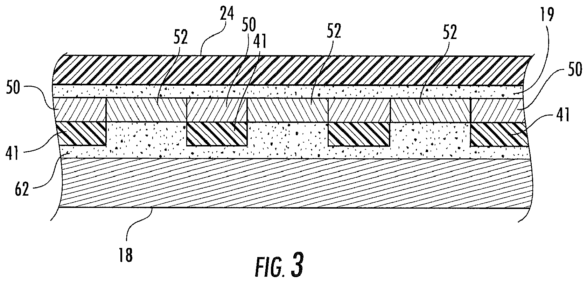

In the first embodiment, the MEIM 20 is operative for reflecting a substantial portion of impinging microwave energy (sometimes referred to as a microwave energy shielding element). For example, the MEIM 20 may be configured as a patch of metal foil having a thickness of from about 5 to about 10 micrometers, for example, about 7 micrometers. Such foil is typically formed from a conductive, reflective metal or metal alloy, for example, aluminum, copper, or stainless steel, but other suitable materials may be used. As a more specific example, the MEIM 20 may be a layer of aluminum foil that is mounted to the substrate 24 in a conventional manner. Specifically, the precursor web 12 may be a laminate comprising the MEIM 20 and the primary substrate 24 joined to one another by way of adhesive material 19 (Fig. 3). In the first embodiment, the MEIM 20 is on the primary substrate 24, and more specifically the MEIM 20 is connected or mounted to the primary substrate 24 by way of the adhesive material 19, although the connecting or mounting may be provided in any other suitable manner.

Alternatively, the MEIM 20 may be a high (greater than about 1.0) optical density evaporated material having a thickness of from about 300 to about 700 or more angstroms. For example, the precursor web 12 may be formed by depositing the MEIM 20 either directly or indirectly onto the primary substrate 24, such as by way of vacuum deposition or in any other suitable manner. More generally, the MEIM 20 may be mounted to the primary substrate 24 in any suitable manner.

The MEIM-side 20 of the precursor web 12 is selectively coated in a predetermined manner with a thermoset polymeric resist coating 26 by drawing the precursor web past or through at least one coater 28. In the first embodiment, the thermoset polymeric resist coating 26 may be an ultraviolet-curable ("UV-curable") resist coating 26. The coater 28 may any suitable coater for depositing the UV-curable resist coating 26 in any suitable discontinuous arrangement (e.g., pattern). In Fig. 1, the coater 28 is schematically shown as being a conventional rotogravure printing press 28. Alternatively, the coater 28 may be other suitable types of coaters, such as a flexographic printing press. Thus and for example, the UV-curable resist coating 26 may be a suitable UV-curable ink, such as a suitable conventional UV-curable ink that is transparent to microwave energy.

In the example of Fig. 1, the conventional gravure press 28 includes an impression roller 30 and a printing cylinder 32 between which the precursor web 12 is nipped. The UV-curable resist coating 26 is contained in and supplied to the printing cylinder 32 from an upwardly open container or fountain 36 of the press 28. A conventional doctor blade 38 is associated with the printing cylinder 32 and fountain 36 in a conventional manner.

In the first embodiment: the UV-curable resist coating 26 has a viscosity suitable for allowing the UV-curable resist coating to be printed for facilitating the disclosed method of the first embodiment; the MEIM 20 of the precursor web 12 is a continuous layer of aluminum 20 ("precursor aluminum") that is sufficiently thick for reflecting impinging microwave energy; and the coater 28 prints the UV-curable resist coating 26 directly onto the outer face of the aluminum 20 in a pattern. The printed pattern is the same as (e.g., substantially the same as) the pattern of the resultant patternized aluminum of the resultant web 16.

The UV-curable resist coating 26 printed on the MEIM 20 is cured by drawing the coated web 12 in sufficiently close proximity to and past at least one ultraviolet ("UV") light source 40. The UV light source(s) 40 may be conventional. The UV light source(s) 40 cause the UV-curable resist coating 26 printed on the MEIM 20 to become a cured thermoplastic resist coating 41. As should be apparent from the foregoing, the cured thermoplastic resist coating 41 may be a UV-cured resist coating 41. The UV-cured resist coating 41 is adhered to and carried by the MEIM-side 20 of the web 12.

The UV-curable resist coating 26 is typically immediately (e.g., substantially immediately) cured after the printing by exposure to the UV energy provided by the at least one UV light source 40. The UV-curable resist coating 26 is typically exposed to sufficient UV energy from the UV light source(s) 40 so that the UV-curable resist coating 26 is immediately (e.g., substantially immediately) cured (e.g., substantially fully cured) as soon as the UV-curable resist 26 coating is carried past the UV light source(s) 40 by the traveling web 12. Typically, as soon as the UV-curable resist coating 26 is fully cured by passing the UV light source(s) 40, the resulting UV-cured resist coating 41 is nearly or approximately (e.g., substantially) 100% solids so that the UV-cured resist coating typically does not include any solvent that has to be dried (e.g., evaporated). Due to the lack of drying and the relatively quick speed of curing of the UV-curable resist coating 26, it is believed that the use of the UV-curable resist coating 26 will increase manufacturing speeds as compared to the use of solvent-based resist coatings. In the first embodiment, the UV-cured resist coating 41 is transparent to microwave energy. In an alternative embodiment, the precursor web 12 may consist solely of the MEIM 20, wherein the MEIM may be in the form of a metallic foil, and the metallic foil with the UV-cured resist coating 41 thereon may be referred to as a laminate.

After formation of the UV-cured resist coating 41, the coated web 12 is drawn through, or otherwise exposed to, a caustic dispersion 42 that may be contained in an upwardly open container 44 (e.g., a caustic bath). In the first embodiment, the UV-cured resist coating 41 is sufficiently resistant to the caustic dispersion 42 (e.g., 50% sodium hydroxide dispersion) so that the caustic dispersion does not react with the protected portion of the MEIM 20, wherein the protected portion of the MEIM is adhered to and superposed with the UV-cured resist coating 41. In contrast, the caustic dispersion 42 reacts with the unprotected portion of the MEIM 20, wherein the unprotected portion of the MEIM is neither adhered to nor superposed with the UV-cured resist coating 41. When the MEIM 20 is aluminum, the caustic dispersion 42 typically deactivates the unprotected portion of the aluminum by converting it to aluminum oxide, wherein the aluminum oxide is the MEIM (e.g., aluminum) in a deactivated condition. The aluminum oxide is relatively transparent to light as compared to pure aluminum. In contrast to aluminum, aluminum oxide is an electrical insulator that is transparent to microwave energy.

Optionally and depending upon factors such as the strength of the caustic dispersion 42 and the duration of the exposure thereto, at least some of the aluminum oxide may be etched away or otherwise removed from the web 12. The caustic dispersion 42 may be more generally referred to as an agent, or a deactivating agent. Examples of suitable deactivating agents are disclosed in U.S. Patent No. 4,865,921. As the web 12 is drawn out of the caustic bath 44, the web typically carries some of the caustic dispersion 42. The web 12 is then drawn through or past a conventional rinsing station 46. In the rinsing station 46, the web 12 is rinsed with water and/or one or more other fluids, or the like, so that the resultant web 16 (e.g., laminate) is absent of (e.g., substantially absent of) any caustic dispersion 42.

The resultant web 16 comprises the precursor web 12 (e.g., polymeric film), a pattern of resultant MEIM 50 (e.g., aluminum), a pattern of deactivated MEIM 52 (e.g., aluminum oxide) and the UV-cured resist coating 41. The pattern of the resultant MEIM 50 of the resultant web 16 corresponds to, and is superposed with, the pattern of the UV-cured resist coating 41 of the resultant web. Examples of patterns of the resultant MEIM 50 in the resultant web 16 are discussed in greater detail below. Any other suitable patterns of the resultant MEIM 50, such as any suitable conventional patterns, are also within the scope of this disclosure.

The resultant web 16 may be drawn through or past a conventional lamination station 60, wherein the resultant web may be laminated (e.g., wet-bond laminated) to the substrate 18 (e.g., paper, or more specifically paperboard) to create the packaging material 10. The substrate 18 may be drawn from a roll, and the packaging material 10 may be formed into another roll. In the packaging material 10, the resultant MEIM 50, deactivated MEIM 52 (e.g., microwave energy transparent material) and UV-cured resist coating 41 are typically positioned between the additional substrate 18 and the primary substrate 24. The laminating at the lamination station 60 may comprise joining the resultant web 16 and the substrate 18 to one another by way of adhesive material 62 (Fig. 3), wherein the this joining together may be carried out in a conventional manner.

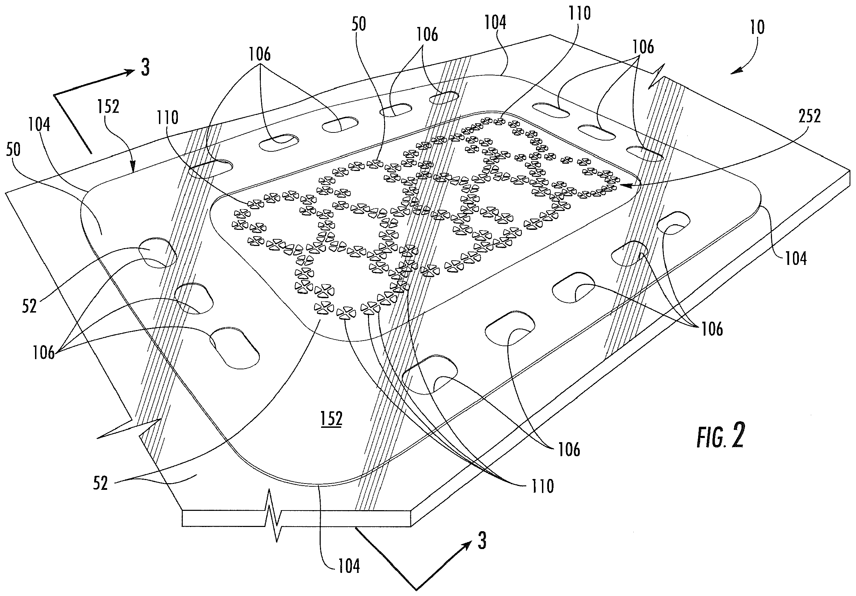

Fig. 2 schematically illustrates a lengthwise section of the packaging material 10 and provides an example of one of the numerous possible configurations or patterns of the resultant MEIM 50, deactivated MEIM 52 (e.g., microwave energy transparent material) and UV-cured resist coating 41(Figs. 1 and 3). In Fig. 2, the primary substrate 24 (Figs. 1 and 3) is facing upward and transparent, so that the resultant MEIM 50 is seen through the transparent primary substrate. Similarly, the deactivated MEIM 52 (Figs. 1 and 3) is transparent in Fig. 2. The UV-cured resist coating 41 is hidden from view beneath the resultant MEIM 50 in Fig. 2. In Fig. 2, the UV-cured resist coating 41 and resultant MEIM 50 are shaped to form first and second sections 152, 252 of the resultant MEIM 50. The first section 152 of the resultant MEIM 50 or the second sections 252 of the resultant MEIM 50 may be omitted and/or configured differently than shown in Fig. 2.

As shown in Fig. 2, the first section 152 of the resultant MEIM 50 is in the form of a metal foil band including somewhat rounded corners 104 and obround holes 106 in the MEIM 50, wherein the holes are in a spaced apart configuration. As used in this Detailed Description section of this disclosure, the term "obround" refers to a shape substantially consisting of two semicircles connected by parallel lines tangent to their endpoints. The first section 152 of the resultant MEIM 50 may be referred to as a microwave energy reflecting (or reflective) element that may be used as a shielding element when an associated food item is prone to scorching or drying out during heating in a microwave oven. More specifically, at least portions of the resultant MEIM 50 together with the deactivated MEIM 52 in the holes 106 may be cooperative, such for diffusing or lessening the intensity of microwave energy, such as when these features are parts of upright walls of a tray. One example of a material utilizing a combination of such microwave energy reflecting and transparent elements is commercially available from Graphic Packaging International, Inc. (Marietta, GA) under the trade name MicroRite® packaging material.

The second sections 252 of the resultant MEIM 50 are in the form of metal foil segments 110 arranged in clusters in a lattice-like configuration. Only a few of the foil segments 110 are identified by their reference numeral in Fig. 2. The first section 152 of the resultant MEIM 50 is spaced from and forms a border around the second sections 252 of the resultant MEIM 50. The second sections 252 of the resultant MEIM 50 may comprise a plurality of microwave energy reflecting elements arranged to form a microwave energy distributing element that is operative for directing microwave energy to specific areas of an associated food item. If desired, the loops defined by the second sections 252 of the resultant MEIM 50 may be of a length that causes microwave energy to resonate (e.g., a resonating patch antenna), thereby enhancing the distribution effect. Examples of microwave energy distributing elements are described in U.S. Patent Nos. 6,204,492, 6,433,322, 6,552,315, and 6,677,563. In the embodiment shown in Figs. 2 and 3, and more specifically in a top plan view similar to Fig. 2, adjacent to each annular deactivated area of MEIM 52 (e.g., microwave energy transparent material), an annular peripheral edge of the resultant MEIM 50 is superposed with an annular peripheral edge of the UV-cured resist coating 41. In the embodiment shown in Fig. 3, layers 18, 19, 24, 41, 50, 52, 62 that are respectively adjacent to one another are more specifically in opposing face-to-face contact with one another. In other embodiments, one or more other layers may be respectively positioned between one or more pairs of the layers 18, 19, 24, 41, 50, 52, 62 that are adjacent to one another in Fig. 3. The portion of the packaging material 10 shown in Fig. 3 is in a flat configuration, so that the resultant and deactivated MEIMs 50, 52 are coplanar, and the layers 18, 19, 24, 41, 50, 52, 62 respectively extend in planes that are parallel to one another.

At least partially reiterating from above, it is within the scope of this disclosure for the resultant web 16 to be in the form of, and to be used as, packaging material. In this regard and in accordance with an embodiment of this disclosure, the packaging material 10, 16 may be formed into, or otherwise incorporated into, any suitable packages, such as cartons, trays, wraps, bags, or the like. Food products to be heated in microwave ovens may be contained in or otherwise associated with the packages. The substrate-side 24 (e.g., polymeric film side) of the precursor web 12 will typically be the interior surface of packages formed from the packaging material 10, 16. However, a variety of differently configured packaging materials and packages are within the scope of this disclosure.

As nonlimiting examples, the primary substrate 24 may be a polymeric film having a thickness from about 8,89 to about 254 µm (about 35 gauge to about 10 mil). The thickness of the polymeric film may be from about 10,16 to about 20,32 µm (about 40 to about 80 gauge), from about 11,43 to about 12,7 µm (about 45 to about 50 gauge), or about 12,19 µm (about 48 gauge). Examples of polymeric films that may be suitable include, but are not limited to, polyolefins, polyesters, polyamides, polyimides, polysulfones, polyether ketones, cellophanes, or any combination thereof. Reiterating from above, the polymeric film may comprise polyethylene terephthalate. Examples of polyethylene terephthalate film that may be suitable for use as the primary substrate 24 include, but are not limited to, MELINEX®, commercially available from DuPont Teijan Films (Hopewell, Va.), and SKYROL, commercially available from SKC, Inc. (Covington, Ga.). Polyethylene terephthalate films are used in commercially available packaging materials, for example, MicroRite® packaging material available from Graphic Packaging International. Other non-conducting primary substrate 24 materials such as paper and paper laminates, metal oxides, silicates, cellulosics, or any combination thereof, also may be used.

The resultant web 16 (e.g., laminate) may be laminated or otherwise joined to another material, such as, but not limited to, the substrate 18, or a surface of a wall of a package or other suitable structure. In one example, the resultant web 16 may be laminated or otherwise joined to a substrate 18 in the form of paper or paperboard. The paper may have a basis weight of from about 22,2 to about 88,8 g/m² (about 15 to about 60 lb./ream (lb./3000 sq. ft)), for example, from about 29,6 to about 59,2 g/m² (20 to about 40 2. lb./ream), for example, about 37 g/m² (about 25 lb./ream). The paperboard may have a basis weight of from about 88,8 to about 488,4 g/m² (about 60 to about 330 lb./ream), for example, from about 118,4 to about 296,0 g/m² (about 80 to about 200 lb./ream). The paperboard generally may have a thickness of from about 0,15 to about 0,76 mm (about 6 to about 30 mils), for example, from about 0,30 to about 0,71 mm (12 to about 28 mils). In one particular example, the paperboard has a thickness of about 0,51 mm (about 20 mils (0.020 inches)). Any suitable paperboard may be used, for example, a solid bleached sulfate board, for example, Fortress® board, commercially available from International Paper Company, Memphis, TN, or solid unbleached sulfate board, such as SUS® board, commercially available from Graphic Packaging International.

If desired, the resultant web 16 or packaging material 10 may further include or otherwise be used in conjunction with other microwave energy interactive elements and/or structures such as, but not limited to, one or more susceptor layers (e.g. layers of aluminum) configured for absorbing at least a portion of impinging microwave energy and converting it to thermal energy (i.e., heat) through resistive losses in the layer of aluminum, or the like. Alternatively, the MEIM 20 and resultant MEIM 50 may be sufficiently thin for functioning as susceptors that absorb at least a portion of impinging microwave energy and convert it to thermal energy (i.e., heat) through resistive losses.

The above-disclosed patterns (e.g., of the resist coating 26, resultant MEIM 50, deactivated MEIM 52, and first and second sections 152, 252) are provided as examples only, and other patterns are within the scope of this disclosure. For example, one or more of the above-disclosed patterns may be tailored to the desired end uses of the packaging materials 10 and 16, or the like.

The above examples are in no way intended to limit the scope of the present inventions. It will be understood by those skilled in the art that while the present disclosure has been discussed above with reference to exemplary embodiments, various additions, modifications and changes can be made thereto without departing from the scope of the inventions, as set forth in the following claims.

## Claims

1. A packaging material, comprising:
a substrate (24);
microwave energy interactive material (50) on the substrate;
microwave energy transparent material (52) on the substrate and adjacent to the microwave interactive material on the substrate, the microwave energy transparent material comprising the microwave energy interactive material in a deactivated condition; and **characterised in that** it comprises thermoset polymeric material (41) on the microwave energy interactive material, the thermoset polymeric material and the microwave energy interactive material being superposed with one another.

2. The packaging material of claim 1, wherein the deactivated microwave energy interactive material is not covered by the thermoset polymeric material.

3. The packaging material of claim 1, wherein the thermoset polymeric material comprises a UV-cured material.

4. The packaging material of claim 1, wherein a peripheral edge of an area of the microwave energy interactive material is superposed with a peripheral edge of the thermoset polymeric material in a plan view of the packaging material.

5. The packaging material of claim 1, wherein:
the substrate has opposite first and second sides;
the microwave energy interactive material is connected to the first side of the substrate; and
the deactivated microwave energy interactive material is connected to the first side of the substrate.

6. The packaging material of claim 1, wherein the deactivated microwave energy interactive material comprises aluminum oxide.

7. The packaging material of claim 1, wherein:
the substrate (24) is a first substrate;
the packaging material further comprises a second substrate (18); and
each of the microwave energy interactive material, the deactivated microwave energy interactive material, and the thermoset polymeric material is positioned between the first and second substrates.

8. The packaging material of claim 7, wherein:
the first substrate comprises a polymeric film; and
the second substrate comprises paper.

9. The packaging material of claim 8, wherein the paper is paperboard.

10. The packaging material of claim 1, wherein:
at least a portion of the substrate extends in a first plane;
at least a portion of both the microwave energy interactive material and the deactivated microwave energy interactive material extend in a second plane, so that at least a portion of the microwave energy interactive material and at least a portion of the deactivated microwave energy interactive material are coplanar; and
the first and second planes are parallel to one another.

11. The packaging material of claim 10, wherein:
at least a portion of the thermoset polymeric material extends in a third plane; and
the first, second and third planes are parallel to one another.

12. The packaging material of claim 11, wherein:
the substrate (24) is a first substrate;
the packaging material further comprises a second substrate (18); each of the microwave energy interactive material, the deactivated microwave energy interactive material, and the thermoset polymeric material is positioned between the first and second substrates;
at least a portion of the second substrate extends in a fourth plane; and
the first, second, third and fourth planes are parallel to one another.

13. A method of forming a microwave energy transparent area in a layer of microwave energy interactive material, the method comprising:
partially coating the layer of microwave energy interactive material with thermoset polymeric material (41), comprising curing the thermoset polymeric material on a first portion of the layer of microwave energy interactive material so that
the cured thermoset polymeric material is operative to protect the first portion (50) of the layer of microwave energy interactive material, and
a second portion (52) of the layer of microwave energy interactive material is
neither covered by nor protected by the cured thermoset polymeric material;
applying an agent to the coated layer of the microwave energy interactive material, so that
the agent transforms the second portion of the layer of microwave energy interactive material into a microwave energy transparent area, and
the cured thermoset polymeric material protects the first portion of the layer of microwave energy interactive material from the agent, so that the first portion of the layer of microwave energy interactive material remains microwave energy interactive.

14. The method of claim 13, wherein:
the agent is a deactivating agent, and
the deactivating agent deactivates the second portion of the layer of microwave energy.

15. The method of claim 13, wherein:
the partially coating is comprised of applying the thermoset polymeric material to the first portion of the layer of microwave energy interactive material, prior to the curing of the thermoset polymeric material; and
the curing of the thermoset polymeric material is comprised of curing the thermoset polymeric material with ultraviolet light.

16. The method of claim 15, wherein the applying of the thermoset polymeric material is comprised of printing the thermoset polymeric material onto the first portion of the layer of microwave energy interactive material.

17. The method of claim 13, wherein:
the layer of microwave energy interactive material is part of a laminate that further comprises a substrate (24);
the layer of microwave energy interactive material has opposite first and second sides;
the first side of the layer of microwave energy interactive material is mounted to the substrate; and
the partially coating is comprised of partially coating the second side of the layer of microwave energy interactive material with the thermoset polymeric material.

18. The method of claim 17, wherein:
the substrate (24) is a first substrate; and
the method further comprises laminating a second substrate (18) to the laminate so that at least each of the cured thermoset polymeric material and the first portion of the layer of microwave energy interactive material is positioned between the first and second substrates.

19. The method of claim 18, wherein:
the first substrate comprises a polymeric film; and
the second substrate comprises paper.

20. The method of claim 13, wherein:
partially coating the layer of microwave energy interactive material with thermoset polymeric material comprises printing the thermoset polymeric material onto the first portion of a layer of microwave energy interactive material;
curing the thermoset polymeric material comprises exposing the thermoset polymeric material on the first portion of the layer of microwave energy interactive material to ultraviolet light; the agent is a deactivating agent to the coated layer of the microwave energy interactive material, so that
the agent deactivates the second portion of the layer of microwave energy interactive material into the microwave energy transparent area.

21. The method of claim 20, wherein:
the layer of microwave energy interactive material is part of a laminate that further comprises a substrate (24); the layer of microwave energy interactive material has opposite first and second sides;
the first side of the layer of microwave energy interactive material is mounted to the substrate; and
the partially coating is comprised of partially coating the second side of the layer of microwave energy interactive material with the thermoset polymeric material.

22. The method of claim 21, wherein:
the substrate (24) is a first substrate; and
the method further comprises laminating a second substrate (18) to the laminate so that at least each of the cured thermoset polymeric material and the first portion of the layer of microwave energy interactive material is positioned between the first and second substrates.

## Patentansprüche

1. Verpackungsmaterial, umfassend:
ein Substrat (24);
Mikrowellenenergie interaktives Material (50) auf dem Substrat;
Mikrowellenenergie transparentes Material (52) auf dem Substrat und neben dem Mikrowellen interaktiven Material auf dem Substrat, wobei das Mikrowellenenergie transparente Material das Mikrowellenenergie interaktive Material in einem deaktivierten Zustand umfasst; und **dadurch gekennzeichnet ist, dass** es duroplastisches Polymermaterial (41) auf dem Mikrowellenenergie interaktiven Material umfasst, wobei das duroplastische Material und das Mikrowellenenergie interaktive Material einander überlagert sind.

2. Verpackungsmaterial nach Anspruch 1, wobei das deaktivierte Mikrowellenenergie interaktive Material nicht durch das duroplastische Polymermaterial abgedeckt ist.

3. Verpackungsmaterial nach Anspruch 1, wobei das duroplastische Polymermaterial ein UV-ausgehärtetes Material umfasst.

4. Verpackungsmaterial nach Anspruch 1, wobei eine Umfangskante einer Fläche des Mikrowellenenergie interaktiven Materials in einer Draufsicht auf das Verpackungsmaterial mit einer Umfangskante des duroplastischen Materials überlagert ist.

5. Verpackungsmaterial nach Anspruch 1, wobei:
das Substrat gegenüberliegende erste und zweite Seiten aufweist;
das Mikrowellenenergie interaktive Material mit der ersten Seite des Substrats verbunden ist; und
das deaktivierte Mikrowellenenergie interaktive Material mit der ersten Seite des Substrats verbunden ist.

6. Verpackungsmaterial nach Anspruch 1, wobei das deaktivierte Mikrowellenenergie interaktive Material Aluminiumoxid umfasst.

7. Verpackungsmaterial nach Anspruch 1, wobei:
das Substrat (24) ein erstes Substrat ist;
das Verpackungsmaterial des Weiteren ein zweites Substrat (18) umfasst; und
jedes des Mikrowellenenergie interaktiven Materials, des deaktivierten Mikrowellenenergie interaktiven Materials und des duroplastischen Polymermaterials zwischen dem ersten und dem zweiten Substrat angeordnet ist.

8. Verpackungsmaterial nach Anspruch 7, wobei:
das erste Substrat einen Polymerfilm umfasst; und
das zweite Substrat Papier umfasst.

9. Verpackungsmaterial nach Anspruch 8, wobei das Papier Karton ist.

10. Verpackungsmaterial des Anspruchs 1, wobei:
wenigstens ein Abschnitt des Substrats sich in einer ersten Ebene erstreckt;
wenigstens ein Abschnitt sowohl des Mikrowellenenergie interaktiven Materials und des deaktivierten Mikrowellenenergie interaktiven Materials sich in einer zweiten Ebene erstrecken, so dass wenigstens ein Abschnitt des Mikrowellenenergie interaktiven Materials und wenigstens ein Abschnitt des deaktivierten Mikrowellenenergie interaktiven Materials koplanar sind; und
die erste und die zweite Ebene parallel zueinander sind.

11. Verpackungsmaterial nach Anspruch 10, wobei:
sich wenigstens ein Abschnitt des duroplastischen Polymermaterials in einer dritten Ebene erstreckt; und
die erste, zweite und dritte Ebene parallel zueinander sind.

12. Verpackungsmaterial nach Anspruch 11, wobei:
das Substrat (24) ein erstes Substrat ist;
das Verpackungsmaterial des Weiteren ein zweites Substrat (18) umfasst;
jedes des Mikrowellenenergie interaktiven Materials, des deaktivierten Mikrowellenenergie interaktiven Materials und des duroplastischen Polymermaterials zwischen dem ersten und dem zweiten Substrat angeordnet ist;
sich wenigstens ein Abschnitt des zweiten Substrats in einer vierten Ebene erstreckt; und
die erste, zweite, dritte und vierte Ebene parallel zueinander sind.

13. Verfahren zum Ausbilden einer Mikrowellenenergie transparenten Fläche in einer Schicht aus Mikrowellenenergie interaktivem Material, wobei das Verfahren umfasst:
teilweises Beschichten der Schicht aus Mikrowellenenergie interaktivem Material mit duroplastischem Polymermaterial (41), umfassend das Härten des duroplastischen Polymermaterials auf einem ersten Abschnitt der Schicht aus Mikrowellenenergie interaktivem Material, so dass
das gehärtete duroplastische Polymermaterial wirksam ist, um den ersten Abschnitt (50) der Schicht aus Mikrowellenenergie interaktivem Material zu schützen, und
ein zweiter Abschnitt (52) der Schicht aus Mikrowellenenergie interaktivem Material weder durch das gehärtete duroplastische Polymermaterial bedeckt noch geschützt ist;
Aufbringen eines Mittels auf die beschichtete Schicht des Mikrowellenenergie interaktiven Materials, so dass
das Mittel den zweiten Abschnitt der Schicht aus Mikrowellenenergie interaktivem Material in einen Mikrowellenenergie transparenten Bereich umwandelt und das gehärtete duroplastische Polymermaterial den ersten Abschnitt der Schicht des Mikrowellenenergie interaktiven Materials vor dem Mittel schützt, so dass der erste Abschnitt der Schicht des Mikrowellenenergie interaktiven Materials Mikrowellenenergie interaktiv bleibt.

14. Verfahren nach Anspruch 13, wobei:
das Mittel ein Deaktivierungsmittel ist und
das Deaktivierungsmittel den zweiten Abschnitt der Schicht des Mikrowellen interaktiven Materials deaktiviert.

15. Verfahren nach Anspruch 13, wobei:
das teilweise Beschichten darin besteht, das duroplastische Polymermaterial auf den ersten Abschnitt der Schicht aus Mikrowellenenergie interaktivem Material vor dem Aushärten des duroplastischen Polymermaterials aufzubringen; und
das Aushärten des duroplastischen Polymermaterials darin besteht, das duroplastische Polymermaterial mit ultraviolettem Licht auszuhärten.

16. Verfahren nach Anspruch 15, wobei das Aufbringen des duroplastischen Polymermaterials darin besteht, dass das duroplastische Polymermaterial auf den ersten Abschnitt der Schicht aus Mikrowellenenergie interaktivem Material aufgedruckt wird.

17. Verfahren nach Anspruch 13, wobei:
die Schicht aus Mikrowellenenergie interaktivem Material ein Teil eines Laminats ist, das des Weiteren ein Substrat (24) umfasst;
die Schicht aus Mikrowellenenergie interaktivem Material eine gegenüberliegende erste und eine zweite Seite aufweist;
die erste Seite der Schicht aus Mikrowellenenergie interaktivem Material auf dem Substrat aufgesetzt ist; und
das teilweise Beschichten darin besteht, dass die zweite Seite der Schicht aus Mikrowellenenergie interaktivem Material teilweise mit dem duroplastischen Polymermaterial beschichtet wird.

18. Verfahren nach Anspruch 17, wobei:
das Substrat (24) ein erstes Substrat ist; und
das Verfahren des Weiteren das Laminieren eines zweiten Substrats (18) auf das Laminat umfasst, so dass wenigstens jedes des ausgehärteten duroplastischen Polymermaterials und des ersten Abschnitts der Schicht aus Mikrowellenenergie interaktivem Material zwischen dem ersten und dem zweiten Substrat angeordnet ist.

19. Verfahren nach Anspruch 18, wobei:
das erste Substrat einen Polymerfilm umfasst; und
das zweite Substrat Papier umfasst.

20. Verfahren nach Anspruch 13, wobei:
teilweises Beschichten der Schicht aus Mikrowellenenergie interaktivem Material mit duroplastischem Polymermaterial das Drucken des duroplastischen Polymermaterials auf den ersten Abschnitt einer Schicht aus Mikrowellenenergie interaktivem Material umfasst;
Aushärten des duroplastischen Polymermaterials das Belichten des duroplastischen Polymermaterials auf dem ersten Abschnitt der Schicht aus Mikrowellenenergie interaktivem Material mit ultraviolettem Licht umfasst;
das Mittel ein Deaktivierungsmittel auf die beschichtete Schicht des Mikrowellenenergie interaktiven Materials ist, so dass
das Mittel den zweiten Abschnitt der Schicht aus Mikrowellenenergie interaktivem Material in die Mikrowellenenergie transparente Fläche deaktiviert.

21. Verfahren nach Anspruch 20, wobei:
die Schicht aus Mikrowellenenergie interaktivem Material ein Teil eines Laminats ist, das des Weiteren ein Substrat (24) umfasst;
die Schicht aus Mikrowellenenergie interaktivem Material eine gegenüberliegende erste und eine zweite Seite aufweist;
die erste Seite der Schicht aus Mikrowellenenergie interaktivem Material auf dem Substrat aufgebracht ist; und
das teilweise Beschichten darin besteht, die zweite Seite der Schicht aus Mikrowellenenergie interaktivem Material teilweise mit dem duroplastischen Polymermaterial zu beschichten.

22. Verfahren nach Anspruch 21, wobei:
das Substrat (24) ein erstes Substrat ist; und
das Verfahren des Weiteren das Laminieren eines zweiten Substrats (18) zu dem Laminat umfasst, so dass
wenigstens jedes des ausgehärteten duroplastischen Polymermaterials und des ersten Abschnitts der Schicht aus Mikrowellenenergie interaktivem Material zwischen dem ersten und dem zweiten Substrat angeordnet ist.

## Revendications

1. Matériau d'emballage comprenant :
un substrat (24) ;
un matériau réagissant à l'énergie microonde (50) sur le substrat ;
un matériau transparent à l'énergie microonde (52) sur le substrat et adjacent au matériau réagissant à l'énergie microonde sur le substrat, le matériau transparent à l'énergie microonde comprenant le matériau réagissant à l'énergie microonde dans un état désactivé ; et **caractérisé en ce qu'**il comprend un matériau polymère thermodurci (41) sur le matériau réagissant à l'énergie microonde, le matériau polymère thermodurci et le matériau réagissant à l'énergie microonde étant superposés l'un sur l'autre.

2. Matériau d'emballage selon la revendication 1, dans lequel le matériau réagissant à l'énergie microonde désactivé n'est pas recouvert par le matériau polymère thermodurci.

3. Matériau d'emballage selon la revendication 1, dans lequel le matériau polymère thermodurci comprend un matériau durci aux UV.

4. Matériau d'emballage selon la revendication 1, dans lequel un bord périphérique d'une zone du matériau réagissant à l'énergie microonde est superposé à un bord périphérique du matériau polymère thermodurci dans une vue en plan du matériau d'emballage.

5. Matériau d'emballage selon la revendication 1, dans lequel :
le substrat présente un premier côté et un deuxième côté opposés ;
le matériau réagissant à l'énergie microonde est relié au premier côté du substrat ; et
le matériau réagissant à l'énergie microonde désactivé est relié au premier côté du substrat.

6. Matériau d'emballage selon la revendication 1, dans lequel le matériau réagissant à l'énergie microonde désactivé comprend de l'oxyde d'aluminium.

7. Matériau d'emballage selon la revendication 1, dans lequel :
le substrat (24) est un premier substrat ;
le matériau d'emballage comprend en outre un deuxième substrat (18) ; et
chacun parmi le matériau réagissant à l'énergie microonde, le matériau réagissant à l'énergie microonde désactivé et le matériau polymère thermodurci est positionné entre les premier et deuxième substrats.

8. Matériau d'emballage selon la revendication 7, dans lequel :
le premier substrat comprend un film polymère ; et
le deuxième substrat comprend du papier.

9. Matériau d'emballage selon la revendication 8, dans lequel le papier est un carton.

10. Matériau d'emballage selon la revendication 1, dans lequel :
au moins une partie du substrat s'étend dans un premier plan ;
au moins une partie du matériau réagissant à l'énergie microonde et du matériau réagissant à l'énergie microonde désactivé s'étend dans un deuxième plan, de telle façon qu'au moins une partie du matériau réagissant à l'énergie microonde et au moins une partie du matériau réagissant à l'énergie microonde désactivé sont coplanaires ; et
les premier et deuxième plans sont parallèles l'un à l'autre.

11. Matériau d'emballage selon la revendication 10, dans lequel :
au moins une partie du matériau polymère thermodurci s'étend dans un troisième plan ; et
les premier, deuxième et troisième plan sont parallèles les uns aux autres.

12. Matériau d'emballage selon la revendication 11, dans lequel :
le substrat (24) est un premier substrat ;
le matériau d'emballage comprend en outre un deuxième substrat (18) ;
chacun parmi le matériau réagissant à l'énergie microonde, le matériau réagissant à l'énergie microonde désactivé et le matériau polymère thermodurci est positionné entre les premier et deuxième substrats ;
au moins une partie du deuxième substrat s'étend dans un quatrième plan ; et
les premier, deuxième, troisième et quatrième plans sont parallèles les uns aux autres.

13. Procédé de formation d'une zone transparente à l'énergie microonde dans une couche de matériau réagissant à l'énergie microonde, le procédé comprenant :
le revêtement partiel de la couche de matériau réagissant à l'énergie microonde, avec un matériau polymère thermodurci (41), comprenant le durcissement du matériau polymère thermodurci sur une première partie de la couche de matériau réagissant à l'énergie microonde,
de manière à ce que le matériau polymère thermodurci traité soit opérationnel pour protéger la première partie (50) de la couche de matériau réagissant à l'énergie microonde,
et où une deuxième partie (52) de la couche de matériau réagissant à l'énergie microonde n'est ni recouverte ni protégée par le matériau polymère thermodurci traité ;
l'application d'un agent sur la couche de matériau réagissant à l'énergie microonde revêtue, de manière à ce que
l'agent transforme la deuxième partie de la couche de matériau réagissant à l'énergie microonde en une zone transparente à l'énergie microonde, et
le matériau polymère thermodurci traité protège la première partie de la couche de matériau réagissant à l'énergie microonde par rapport à l'agent, de manière à ce que la première partie de la couche de matériau réagissant à l'énergie microonde continue de réagir à l'énergie microonde.

14. Procédé selon la revendication 13, dans lequel :
l'agent est un agent désactivant, et
l'agent désactivant désactive la deuxième partie de la couche d'énergie microonde.

15. Procédé selon la revendication 13, dans lequel :
le revêtement partiel comprend l'application du matériau polymère thermodurci sur la première partie de la couche de matériau réagissant à l'énergie microonde, avant le durcissement du matériau polymère thermodurci ; et
le durcissement du matériau polymère thermodurci comprend le durcissement du matériau polymère thermodurci avec une lumière ultraviolette.

16. Procédé selon la revendication 15, dans lequel l'application du matériau polymère thermodurci comprend l'impression du matériau polymère thermodurci sur la première partie de la couche de matériau réagissant à l'énergie microonde.

17. Procédé selon la revendication 13, dans lequel :
la couche de matériau réagissant à l'énergie microonde fait partie d'un stratifié comprenant en outre un substrat (24) ;
la couche de matériau réagissant à l'énergie microonde présente des premier et deuxième côtés opposés ;
le premier côté de la couche de matériau réagissant à l'énergie microonde est montée sur le substrat ; et
le revêtement partiel comprend le revêtement partiel du deuxième côté de la couche de matériau réagissant à l'énergie microonde avec le matériau polymère thermodurci.

18. Procédé selon la revendication 17, dans lequel :
le substrat (24) est un premier substrat ; et
le procédé comprend en outre la stratification d'un deuxième substrat (18) sur le stratifié, de manière à ce qu'au moins chacun parmi le matériau polymère thermodurci traité et la première partie de la couche de matériau réagissant à l'énergie microonde soit positionné entre les premier et deuxième substrats.

19. Procédé selon la revendication 18, dans lequel :
le premier substrat comprend un film polymère ; et
le deuxième substrat comprend du papier.

20. Procédé selon la revendication 13, dans lequel :
le revêtement partiel de la couche de matériau réagissant à l'énergie microonde avec un matériau polymère thermodurci comprend l'impression du matériau polymère thermodurci sur la première partie d'une couche de matériau réagissant à l'énergie microonde ;
le durcissement du matériau polymère thermodurci comprend l'exposition du matériau polymère thermodurci sur la première partie de la couche de matériau réagissant à l'énergie microonde à une lumière ultraviolette ;
l'agent est un agent désactivant sur la couche revêtue du matériau réagissant à l'énergie microonde, de telle façon que
l'agent désactive la deuxième partie de la couche de matériau réagissant à l'énergie microonde dans la zone transparente à l'énergie microonde.

21. Procédé selon la revendication 20, dans lequel :
la couche de matériau réagissant à l'énergie microonde fait partie d'un stratifié comprenant en outre un substrat (24) ;
la couche de matériau réagissant à l'énergie microonde présente un premier côté et un deuxième côté opposés ;
le premier côté de la couche de matériau réagissant à l'énergie microonde est monté sur le substrat ; et
le revêtement partiel comprend le revêtement partiel du deuxième côté de la couche de matériau réagissant à l'énergie microonde avec le matériau polymère thermodurci.

22. Procédé selon la revendication 21, dans lequel :
le substrat (24) est un premier substrat ; et
le procédé comprend en outre la stratification d'un deuxième substrat (18) sur le stratifié, de manière à ce que
chacun parmi le matériau polymère thermodurci traité et la première partie de la couche de matériau réagissant à l'énergie microonde soit positionné entre les premier et deuxième substrats.
